# FASCICULE DE BREVET EUROPEEN

(11) **EP 0 922 393 B1**
(45) Date de publication et mention de la délivrance du brevet: **08.10.2003**
(21) Numéro de dépôt: 97203916.8
(22) Date de dépôt: 12.12.1997
(51) Int. Cl.: A23L 1/01, A23C 9/154, A23L 1/187

(54) **Cuisson d'entremets aux oeufs par l'air humidifié**
Verfahren zum Backen von Eier-Speisen durch befeuchtete Luft
Method for cooking egg-based desserts with moistened air

(43) Date de publication de la demande: 16.06.1999
(73) Titulaire: SOCIETE DES PRODUITS NESTLE S.A., 1800 Vevey (CH)
(72) Inventeur: Carment, Laurent, 14130 Le Breuil-en-Auge (FR)
(74) Mandataire: Vuille, Roman

(56) Documents cités:
- EP-A- 0 489 954
- EP-A- 0 795 276
- FR-A- 2 094 941
- FR-A- 2 296 376
- US-A- 4 877 625

## Description

La présente invention a pour objet un procédé de cuisson d'entremets aux oeufs.

Traditionnellement, ces compositions alimentaires sont cuites industriellement au four dans un récipient.

Une cuisson au four, à l'air sec, présente le désavantage d'être réalisée à des températures élevées, de l'ordre de 140 à 180° C, pendant 30 à 60 min. De ce fait, ce type de compositions alimentaires a tendance à ne pas être cuit de manière homogène et présente des points de surchauffe en surface et au contact des parois du récipient.

Par ailleurs, les entremets aux oeufs sont traditionnellement cuits au bain-marie par la ménagère, pendant 45-75 min, à une température de l'air de 120-140° C et une température du bain de 80-100° C.

Une cuisson au bain-marie permet de cuire de manière homogène mais, en surface, des bulles ont tendance à se former, du fait de la condensation de la vapeur. Cette cuisson est également souvent longue et présente des inconvénients de manipulation. Pour ces raisons ainsi que pour des problèmes de maintien de la qualité microbiologique, un tel procédé ne peut être réalisé industriellement.

EP-A-0 795 276 divulgue un procédé de préparation d'un flan au chocolat cuit au four. FR-A-2 296 376 divulgue un procédé de préparation industrielle des flans, ledit procédé étant une cuisson classique à sec. US-A-4 877 625 divulgue un mode de cuisson UHT pour la préparation d'une crème anglaise douce. FR-A-2 094 941 divulgue un procédé de fabrication industrielle d'un entremets aux oeufs cuit au bain-marie.

Dans le domaine de la fabrication des compositions alimentaires de type entremet aux oeufs, aucun procédé rapide et simple permettant de réaliser de telles compositions présentant à la fois une texture homogène et le maintien de bonnes qualités microbiologiques n'est connu.

La présente invention a pour but de répondre à ce besoin.

A cet effet, dans le procédé selon la présente invention, on soumet la composition alimentaire de type entremet aux oeufs pendant 15 - 30 min à un flux d'air sec à 105 - 135°C enrichi en humidité à 60 - 95°C de température humide.

On a constaté avec surprise que le procédé selon l'invention permet de cuire rapidement et simplement de telles compositions alimentaires de manière homogène, c'est à dire sans qu'il y ait de points de surchauffe à l'intérieur de la composition alimentaire, notamment au contact du récipient, et sans qu'il y ait, en surface, formation de bulles dûes à la condensation de la vapeur.
Par ailleurs, le procédé selon l'invention permet de réaliser des entremets aux oeufs présentant de bonnes qualités rhéologiques au niveau de la gélification.
De plus, le procédé selon l'invention permet de réaliser de telles compositions alimentaires présentant une très bonne stabilité microbiologique au cours de la fabrication et après stockage jusqu'à 5 semaines à températures réfrigérées, malgré le fait que la préparation contenant les oeufs ne subisse pas une étape de stérilisation supplémentaire.
Enfin, le procédé selon l'invention permet de fabriquer industriellement des compositions alimentaires de type entremet aux oeufs ayant une texture proche de celle d'une telle composition alimentaire réalisées traditionnellement, au bain-marie.

Dans la suite de la description, on emploiera l'expression "composition alimentaire de type entremet aux oeufs" ou "entremets aux oeufs" pour désigner des compositions alimentaires à base d'oeufs, telles que des flans salés ou sucrés, des clafoutis ou des crèmes brûlées, qui sont traditionnellement cuites au four, à l'air sec ou au bain-marie.

Dans le procédé selon l'invention, on soumet la composition alimentaire de type entremet aux oeufs, contenue dans un récipient, pendant 15-30 min, à un flux d'air sec à 105-135° C enrichi en humidité à 60-95° C de température humide, de manière à permettre la transformation physique de la composition alimentaire de l'état liquide à l'état de gel, tout en évitant la surchauffe du récipient et ainsi la formation de points de surchauffe au contact des parois du récipient. Dans le procédé selon l'invention, on peut cuire la composition alimentaire de type entremet aux oeufs dans une coupelle aluminium, un pot en verre ou un pot en plastique, par exemple.

Dans le procédé selon la présente invention, on effectue une cuisson de la composition alimentaire de type entremet aux oeufs par conduction et par convection. On effectue, d'une part, une cuisson par convection en transmettant la chaleur du flux d'air sec enrichi en humidité à la surface de la composition alimentaire et, d'autre part, une cuisson par conduction en transmettant à la composition alimentaire la chaleur de ce flux par chauffage du récipient. On peut ainsi transmettre un maximum d'énergie calorifique à la composition alimentaire en la soumettant à un flux d'air sec enrichi en humidité à une température faible, de manière à éviter la formation de croûtes, par exemple.

Lors de la cuisson, l'enthalpie spécifique du flux d'air peut être de 120-1500 kJ/kg, par exemple. De préférence, la valeur de l'enthalpie spécifique du flux d'air est de 700-1500 kJ/kg.

La vitesse d'air soufflé sur la composition de type entremet aux oeufs peut être de 1-7 m/s, de manière à permettre un bon renouvellement du flux d'air au contact de la composition alimentaire et favoriser ainsi les échanges thermiques, par exemple. De plus, si on cuit à une vitesse d'air soufflé suffisament élevée, on évite également la condensation de la vapeur en surface.

Au cours de la cuisson, la teneur en eau évaporée est faible. De préférence, l'eau évaporée de la composition alimentaire est de 1-6%. L'humidité transmise lors de la cuisson par le flux d'air réduit le désquilibre entre la teneur en eau de départ de la composition de type entremet aux oeufs et celle du flux d'air.

Au cours de la cuisson, de préférence, la vitesse maximale de montée en températures au coeur de la composition de type entremet aux oeufs est de 65-90° C/min. Une forte montée en températures au coeur de la composition alimentaire met en évidence une bonne difusion de la chaleur à l'intérieur de la composition alimentaire et ainsi une cuisson homogène.

La présente invention a également pour objet la composition alimentaire de type entremet aux oeufs réalisée selon le procédé.
La composition alimentaire de type entremet aux oeufs peut présenter une teneur en eau de 30-70% et une teneur en oeufs de 5-20%, par exemple.
On peut notamment réaliser rapidement, de manière industrielle, un pudding aromatisé ou non, une crème brûlée et/ou un flan salé ou sucré ayant une très bonne stabilité microbiologique après stockage jusqu'à 5 semaines à températures réfrigérées et présentant une texture comparable à celle de telles compositions alimentaires réalisées au bain-marie. De préférence, cette composition présente une réduction de la charge microbienne en germes aérobiques thermorésistants de 1,5 log à 3 log, au cours de la cuisson.

Le procédé de cuisson d'entremets aux oeufs selon la présente invention et les entremets aux oeufs ainsi réalisés sont caractérisés plus en détails ci-après à l'aide de différentes études effectuées sur le plan organoleptique et sur le plan microbiologique. Les pourcentages sont donnés en poids, sauf indication contraire.

### 1. Analyse comparative de 2 modes de cuisson traditionnels avec la cuisson selon la mise en oeuvre du procédé de l'invention

On effectue une analyse comparative entre une cuisson traditionnelle industrielle, au four à l'air sec, une cuisson traditionnelle au bain-marie et une cuisson selon la mise en oeuvre du procédé de la présente invention.

Pour ce faire, on prépare un mélange contenant 250 gr de lait entier, 150 gr de sucre et 700 gr de crème contenant 35% de matière grasse.

On préchauffe ce mélange à 70° C puis on le stérilise à 130° C, pendant 3 min, et on le refroidit à 8° C, avant d'y incorporer les oeufs et l'arôme de vanille.

On incorpore donc au mélange, sous agitation 280 gr de jaunes d'oeufs et 5 gr d'arôme de vanille, de manière à obtenir une préparation pour crème brûlée.

Puis, on chauffe cette préparation à 73° C et on l'homogénéise, avant de la doser dans des pots en verre de 50 gr.

On répartit ensuite ces pots en 3 lot que l'on cuit chacun selon l'un des 3 modes de cuisson, précédement cités.

Les paramètres de cuisson ainsi que les mesures comparatives sont mentionnés dans le tableau I ci-après.

**Tableau I**

| | a) | b) | c) |
|---|---|---|---|
| température de cuisson (° C) | 200 | 160 | 130 |
| durée de cuisson (min) | 50 | 80 | 25 |
| température du bain (° C) | - | 90 | - |
| vitesse d'air (m/s) | 2 | - | 6 |
| vitesse maximale de montée de température au coeur du mélange (°C/min) | 10 | 5 | 80 |
| eau évaporée du mélange (%) | 12 | 7 | 6 |
| réduction logaritmique de *bacillus cereus* pendant la cuisson (log) | 1 | 0 | 2 |
| légende: a) cuisson traditionnelle industrielle au four à l'air sec | | | |
| b) cuisson traditionnelle au bain-marie | | | |
| c) cuisson par la mise en oeuvre du procédé selon l'invention | | | |

Cette analyse comparative met en évidence le fait que le procédé selon la présente invention permet de cuire une composition alimentaire de type entremet aux oeufs de façon homogène, puisque la montée en températures au coeur de la préparation est très rapide. Pour les procédés de cuisson traditionnelle, au four à air sec ou au bain-marie, la montée en températures au coeur de la préparation est relativement lente. Une montée rapide en températures au coeur de la préparation permet d'éviter la formation de points de surchauffe à l'intérieur du mélange notamment en surface et au contact des parois du récipient.

Par ailleurs, cette analyse comparative met en évidence le fait que le procédé selon l'invention permet d'éviter un dessèchement de la préparation, étant donnée que l'eau évaporée de la préparation n'est que de 6%, au cours de la cuisson.
Enfin, cette analyse comparative permet de mettre en évidence le fait que la cuisson selon le procédé de l'invention contribue à la réduction de la charge microbienne, notamment en germes bactériens aérobiques thermorésistants, dans la composition alimentaire.

### 2. Test de pénétrométrie

On effectue un test de pénétrométrie, à l'aide d'un pénétromètre TAXTZ, commercialisé par la Société Rhéo, 99, route de Versailles, F-91160 CHAMPAN, afin de caractériser la fermeté de la texture gélifiée d'une composition alimentaire de type entremet aux oeufs, cuite selon le procédé de la présente invention.

Pour ce faire, on prépare une crème brûlée et on la cuit selon le procédé de la présente invention, tel que décrit dans le test 1., ci-dessus.

On utilise un piston de 25 mm de diamètre que l'on déplace dans la crème brûlée jusqu'à 10 mm d'épaisseur, à une vitesse de 0,5 mm/sec. Au cours de ce déplacement dans la composition, des capteurs de pression permettent de mesurer la résistance de pénetration. On mesure ainsi la force de rupture de la composition alimentaire qui permet de définir la fermeté de la texture gélifiée de la crème brûlée. Ensuite, le piston revient à sa position initiale.

On mesure une force de rupture de 0,70 N.

On effectue la même mesure pour une crème brûlée cuite traditionnellement au bain-marie. La force de rupture est de 0,77 N.

Ainsi le procédé selon la présente invention permet de cuire, rapidement et de manière industrielle, des entremets aux oeufs ayant une texture souple et lisse comparable à celle de telles compositions alimentaires cuites traditionnellement au bain-marie.

### 3. Test de relaxation

On effectue un test de relaxation, afin de mesurer l'élasticité d'une composition alimentaire de type entremet aux oeufs cuite selon le procédé de la présente invention.

Pour ce faire, on prépare une crème brûlée et on la cuit selon le procédé de la présente invention, tel que décrit dans le test 1., ci-dessus.

On déplace une sonde dans la crème brûlée, sur 2 mm d'épaisseur, à une vitesse de 2 mm/sec et l'on observe comment le gel de la composition alimentaire de type entremet aux oeufs se transforme. A 2 mm d'épaisseur, on maintient la sonde dans la crème brulée pendant 40 sec, avant de la sortir de la crème brûlée.

On mesure la force de relaxation (F₁) à 2 mm d'épaisseur dans la crème brûlée et la force de relaxation (F₂) après un temps d'attente de 40 sec.

Puis on calcule le pourcentage de relaxation qui correspond à: ((F₁ - F₂)/ F₁)^{*}100.
La valeur du pourcentage de relaxation permet de définir l'élasticité de la composition alimentaire.

On mesure une force de relaxation (F₁) de 0,55 N et une force de relaxation (F₂) de 0,20 N. Ainsi, le pourcentage de relaxation est de 63,63 %.

Cette valeur du pourcentage de relaxation met en évidence le fait que la crème brûlée cuite selon le procédé de l'invention présente un gel stable ayant une très bonne élasticité.

Le procédé de cuisson d'entremets aux oeufs selon la présente invention et les entremets aux oeufs ainsi réalisés sont décrits plus en détails dans les exemples ci-après. Dans ces exemples, les pourcentages et parties sont donnés en poids, sauf indications contraires.

### Exemple 1

On prépare une crème au caramel selon le procédé de cuisson de la présente invention.

Pour ce faire, on préchauffe à 70° C, pendant 1 min, un mélange contenant 1000 gr de lait entier et 200 gr de sucre.

On le stérilise à 130° C, pendant 3 min, avant de le refroidir à 8° C et d'y ajouter 200 gr d'oeufs entiers et 160 gr de jaunes d'oeufs, de manière à réaliser une préparation au caramel.

On préchauffe alors cette préparation à 60° C pendant 2 min, avant de la répartir dans des pots de 25 gr, dans lesquel on a au préalable coulé du caramel liquide.

On cuit alors la préparation au caramel en la soumetant pendant 20 min à un flux d'air sec à 120° C enrichi en humidité à 90° C, de manière à permettre la transformation physique de la préparation au caramel de l'état liquide à l'état de gel.

La valeur de l'enthalpie spécifique du flux d'air est de 1200 kJ/kg.

Lors de la cuisson la vitesse du flux d'air est de 6 m/s, de manière à permettre une cuisson homogène de la préparation.

On obtient ainsi une crème au caramel à la texture lisse et onctueuse et présentant une structure geléifiée homogène.

### Exemple 2

On prépare un entremet au saumon selon le procédé de cuisson de la présente invention.

Pour ce faire, on prépare un mélange contenant 185 gr de lait écrémé, 5 gr de protéines sériques, 10 gr de sel, 2 gr de poivre, 15 gr d'aneth et 566 gr de crème contenant 40% de matière grasse.

On préchauffe ce mélange à 70° C puis on le stérilise à 127° C et on le refroidit à 4° C, avant d'y incorporer les oeufs et l'arôme de saumon.

On incorpore donc au mélange, sous agitations, 115 gr d'oeufs entiers et 5 gr d'arôme de saumon, de manière à obtenir une préparation pour entremet au saumon.

Puis, on chauffe cette préparation à 73° C et on l'homogénéise, avant de la répartir dans des moules rectangulaires de 100 gr.

On cuit alors cette préparation en la soumetant pendant 20 min à un flux d'air sec à 110° C enrichi en humidité à 87° C, de manière à permettre la transformation physique de la préparation de l'état liquide à l'état de gel.

La valeur de l'enthalpie spécifique du flux d'air est de 1000 kJ/kg.

Lors de la cuisson la vitesse du flux d'air est de 7 m/s, de manière à permettre une cuisson homogène de la préparation.

On obtient ainsi un entremet au saumon à la texture lisse et onctueuse et présentant une structure geléifiée homogène.

## Revendications

1. Procédé de cuisson d'une composition alimentaire de type entremet aux oeufs, dans lequel on soumet pendant 15-30 min la composition à un flux d'air sec à 105-135°C enrichi en humidité à 60-95°C de température humide.

2. Procédé selon la revendication 1 dans lequel l'enthalpie spécifique du flux d'air est de 120-1500 kJ/kg.

3. Procédé selon l'une des revendications 1 ou 2, dans lequel la vitesse d'air soufflé sur la composition est de 1-7 m/s.

4. Procédé selon les revendications 1 à 3, dans lequel la teneur en eau évaporée de la composition de type entremet aux oeufs est de 1-6% au cours de la cuisson.

5. Composition alimentaire de type entremet aux oeufs susceptible d'être obtenue par la mise en oeuvre du procédé selon l'une des revendications 1 à 4.

6. Composition alimentaire selon la revendication 5, **caractérisée par le fait qu'**elle présente une réduction de la charge microbienne en germes aérobiques thermorésistants de 1,5 log à 3 log, au cours de la cuisson.

## Patentansprüche

1. Verfahren zum Kochen einer Nahrungsmittel Zusammensetzung vom Typ Eierspeise, bei dem man die Zusammensetzung während 15-30 min einem trockenen Luftstrom mit 105-135°C aussetzt, der mit Feuchtigkeit auf eine Feuchtetemperatur von 60-95°C angereichert ist.

2. Verfahren nach Anspruch 1, bei dem die spezifische Enthalpie des Luftstroms 120-1500 kJ/kg beträgt.

3. Verfahren nach einem der Ansprüche 1 oder 2, bei dem die Geschwindigkeit der auf die Zusammensetzung aufgeblasenen Luft 1-7 m/s beträgt.

4. Verfahren nach den Ansprüchen 1 bis 3, bei dem der Anteil an während des Kochens verdampftem Wasser der Zusammensetzung vom Typ Eierspeise 1-6% beträgt.

5. Nahrungsmittelzusammensetzung vom Typ Eierspeise, die nach dem Verfahren nach einem der Ansprüche 1 bis 4 erhältlich ist.

6. Nahrungsmittelzusammensetzung nach Anspruch 5, **dadurch gekennzeichnet, daß** sie eine Reduzierung der mikrobiellen Belastung mit wärmeresisten aeroben Keimen während des Kochens von 1,5 log bis 3 log zeigt.

## Claims

1. Method for cooking a food composition of the dessert type made with eggs, wherein the composition is subjected for 15-30 min to a stream of dry air at 105-135°C enriched with humidity to 60-95°C wet-bulb temperature.

2. Method according to claim 1 wherein the specific enthalpy of the air stream is 120-1500 kJ/kg.

3. Method according to either claim 1 or 2 wherein the velocity of the air blown over the composition is 1-7 m/s.

4. Method according to claims 1 to 3, wherein the amount of water evaporated from the composition of the dessert type made of eggs is 1-6 % during cooking.

5. Food composition of the dessert type made of eggs capable of being obtained by implementing the method according to one of claims 1 to 4.

6. Food composition according to claim 5, **characterized in that** it exhibits a reduction in the microbial charge of heat-resistant aerobic germs from log 1.5 to log 3, during cooking.
